# EUROPÄISCHE PATENTSCHRIFT

(11) **EP 3 424 376 B1**
(45) Veröffentlichungstag und Bekanntmachung des Hinweises auf die Patenterteilung: **05.05.2021**
(21) Anmeldenummer: 18176296.4
(22) Anmeldetag: 06.06.2018
(51) Int. Cl.: A47J 31/44

(54) **VORRICHTUNG MIT EINEM AUSLASS INSBESONDERE FÜR MILCHSCHAUM, SOWIE EINE KAFFEEMASCHINE**
DEVICE WITH AN OUTLET IN PARTICULAR FOR MILK FOAM, AND A COFFEE MACHINE
DISPOSITIF DOTÉ D'UNE SORTIE, EN PARTICULIER POUR MOUSSE DE LAIT AINSI QU'UNE MACHINE À CAFÉ

(30) Priorität: 06.07.2017 CH 8762017
(43) Veröffentlichungstag der Anmeldung: 09.01.2019
(73) Patentinhaber: Steiner AG Weggis, 6353 Weggis (CH)
(72) Erfinder: STEINER, Adrian, 6353 Weggis (CH)
(74) Vertreter: Luchs, Willi

(56) Entgegenhaltungen:
- CN-A- 106 388 606
- CN-A- 106 720 022
- TW-A- 201 424 608
- US-A1- 2009 202 686
- US-A1- 2009 317 519

## Beschreibung

Die Erfindung betrifft eine Vorrichtung mit einem Auslass insbesondere für Milchschaum, sowie eine Kaffeemaschine mit einer derartigen Vorrichtung nach dem Oberbegriff des Anspruchs 1 bzw. des Anspruchs 6.

Bei der Kaffeezubereitung mit einer Kaffeemaschine wird dem herausgelassenen Kaffee von Hand insbesondere Milchschaum aus einer Kanne oder ähnlichem in der Weise zugeführt, dass auf dem Kaffee ein grafisches Muster entsteht, was unter der Bezeichnung "Latte-Art" bekannt ist. Die Ausführung und Gestaltung des Musters ist von der Kreativität und Geschicklichkeit der ausführenden Person bestimmt. Diese Art der Zubereitung ist zeitaufwendig und verlangt viel Übung, bis eine Person die gewünschten Motive formschön bilden kann.

Davon ausgehend ist bei einem Verfahren und einer Einrichtung zum Ausgiessen von Milchschaum gemäss der Druckschrift EP 2 893 857 offenbart, solche Motive maschinell zu erzeugen. Es wird dabei der Auslass für den Milchschaum automatisiert gesteuert über der Oberfläche des in eine Tasse gefüllten Kaffees geführt. Die Vorrichtung zum Bewegen des Auslasses ist dabei als Roboter ausgeführt. Damit kann der Milchschaum automatisch mittels einer räumlichen in zwei oder drei Koordinatenrichtungen (x, y, z) gesteuerten Einrichtung ausgelassen und das Muster erzeugt werden.

Gemäss der Publikation US 2009/202686 wird ein Design mit Milchschaum auf einer Kaffee-Flüssigkeit erzeugt, wobei diese Designs bei einer Einrichtung separiert von einer Kaffeemaschine erstellt werden. Zudem wird bei der Kaffeemaschine nicht nur Kaffee, sondern auch der Milchschaum in die Tasse eingefüllt. Erst danach wird eine Kaffeelösung von einem Reservoir auf den Milchschaum geleert, dazu diese neben der Kaffeemaschine angeordnete separate Einrichtung vorgesehen ist, die einen von einem Computer gesteuerten Spendermechanismus aufweist, der in X, Y und Z-Richtung bewegbar ist. Dieser Spendermechanismus wird mit elektronischen Motoren oder dergleichen gesteuert angetrieben. Dieses Reservoir ist durch eine Leitung mit dem Spender des Spendermechanismus verbunden. Dieses Reservoir und die Leitung sind fest über dem bewegbaren Spender des Spendermechanismus installiert und führen relativ zu diesem keine Verschiebung bzw. Verschwenken aus.

Eine Einrichtung zum Verarbeiten von Lebensmittel gemäss der Druckschrift TW 201424608 funktioniert derart, dass bei ihr ein Spender entlang einer Schiene in Y-Richtung hin- und herbewegbar ist, welche ihrerseits auf einer Basis quer dazu in X-Richtung verschiebbar ist. Der Spender drückt Lebensmittel bedarfsmässig aus einer untenliegenden Öffnung heraus.

In der Druckschrift CN106388606 ist ein "Latte Art"-Gerät offenbart, welches einen Ständer, einen an diesem gelenkig gehaltenen verschwenkbaren Tragarm mit einer Auslassdüse, einen Saucenspender und eine Steuerung umfasst. Der Tragarm ist mit einem Mechanismus zur Implementierung von drei Freiheitsgraden der Latte-Art-Düse versehen.

Das Dokument US 2009/0317519 A1 ist auf ein Druckverfahren eines Designs auf eine Getränke-Abbildung bezogen, bei dem ein Printerkopf mit einer geniessbaren Flüssigkeit von einem Behälter via eine Leitung versorgt wird. Dieser Printerkopf kann in einer Ebene durch zwei mit ihm verbundene Arme verschoben werden und zusätzlich wird die Tasse in der Höhe bewegt. Der erzeugte Flüssigkeitsstrahl wird zwischen zwei Hochvolt-Platten durchgelassen und dabei von diesen durch eine Steuerung abgelenkt.

Bei einem riemengetriebenen Gerät nach der Druckschrift CN 106720022 erfolgt ebenfalls eine Herstellung von Kaffee-Latte. Das Gerät umfasst einen Maschinenrahmen und eine Latte-Art-Steuervorrichtung, dazu ebenso Führungselemente für ein Bewegen des Druckkopfs in x-, y- und z-Richtung vorgesehen sind, durch die ein automatisiertes Erzeugen von Oberflächendesigns auf einem Kaffeegetränk ermöglicht wird.

Die Aufgabe der vorliegenden Erfindung besteht darin, eine Vorrichtung zu schaffen, mittels welcher eine konstruktive Vereinfachung und eine kompakte Bauweise für diese automatische Erzeugung von Mustern erzielt wird, wobei die für den angestrebten Einsatzzweck erforderliche Funktionalität erhalten bleiben soll, ein Fluid innerhalb einer vorgegebenen Fläche an jedem beliebigen Punkt gezielt ausgiessen zu können.

Die Aufgabe ist erfindungsgemäss durch die Merkmale des Anspruchs 1 gelöst.

Die beschriebene Vorrichtung zum Ausgiessen eines Fluids, insbesondere zum gezielten Aufbringen einer zweiten Getränkekomponente auf die Oberfläche einer ersten Getränkekomponente, beispielsweise Milchschaum auf die Oberfläche von Kaffee, zeichnet sich durch ihre kompakte Bauweise aus. Die Ausführung mit der schwenkbaren Führungshülse und dem darin geführten Milchschaum-Schlauch ist äusserst schlank und benötigt wenig Platz. Aufgrund der sich ergebenden kompakten Bauweise kann die Vorrichtung auch in bestehende Getränkeausläufe von Kaffeemaschinen integriert werden.

Der Haupt-Getränkeauslass steht mit einer Zubereitungseinheit für Kaffee und das Schlauchelement ist insbesondere mit einem Milchschäumer in der Kaffeemaschine verbunden.

Mit dem Vorgang des gesteuerten Bewegens des zweiten Getränkeauslasses wird derselbe um eine Drehachse in einer Tangentialrichtung verschwenkt, und separat bezogen auf die Drehachse radial bewegt, oder eine gesteuerte Kombination der genannten Bewegungsvorgänge erfolgt. Dazu erstreckt sich innerhalb der Führungshülse ein Schlauchelement, welches den zweiten Getränkeauslass umfasst, und/oder das Schlauchelement innerhalb der Führungshülse entlang der Längserstreckung der Führungshülse translatorisch verschiebt, oder eine Kombination der genannten Bewegungsvorgänge ausgeführt wird. Insbesondere erstreckt sich nur ein Teil des Schlauchelements entlang seiner Längserstreckung innerhalb der Führungshülse. Durch die Steuerung der Bewegung des zweiten Getränkeauslasses kann hiermit dieses graphisches Muster, beispielsweise in Form einer figürlichen oder ornamentalen Darstellung, erzeugt werden.

Bei dieser gesteuerten Bewegung können in der Steuereinrichtung, welche Antriebseinheiten für die tangentiale und die radiale Bewegung des zweiten Getränkeauslasses ansteuert, Programme zur Erzeugung bestimmter Muster vorgegeben sein, welche vorteilhaft eine synchrone Bewegung dieses Getränkeauslasses in der radialen und tangentialen Richtung bewirkt.

Das beschriebene Verfahren kann weiterhin umfassen, den zweiten Getränkeauslass senkrecht zu der Fläche, in der die Führungshülse verschwenkt wird, translatorisch zu bewegen. Somit kann beispielsweise die Höhe des zweiten Getränkeauslasses über einer Oberfläche, auf welche die zweite Getränkekomponente aufgebracht wird, auf einen bestimmbaren Abstand eingestellt werden.

Die Erfindung sowie weitere Vorteile derselben sind nachfolgend anhand eines Ausführungsbeispiels unter Bezugnahme auf die Zeichnung näher erläutert. Es zeigen:
- Fig. 1: eine Ansicht sowie einen teilweisen Längsschnitt einer erfindungsgemässen Vorrichtung als Teil einer Kaffeemaschine; und
- Fig. 2: eine perspektivische Ansicht der Vorderseite einer Kaffeemaschine mit einer Vorrichtung nach Fig. 1.

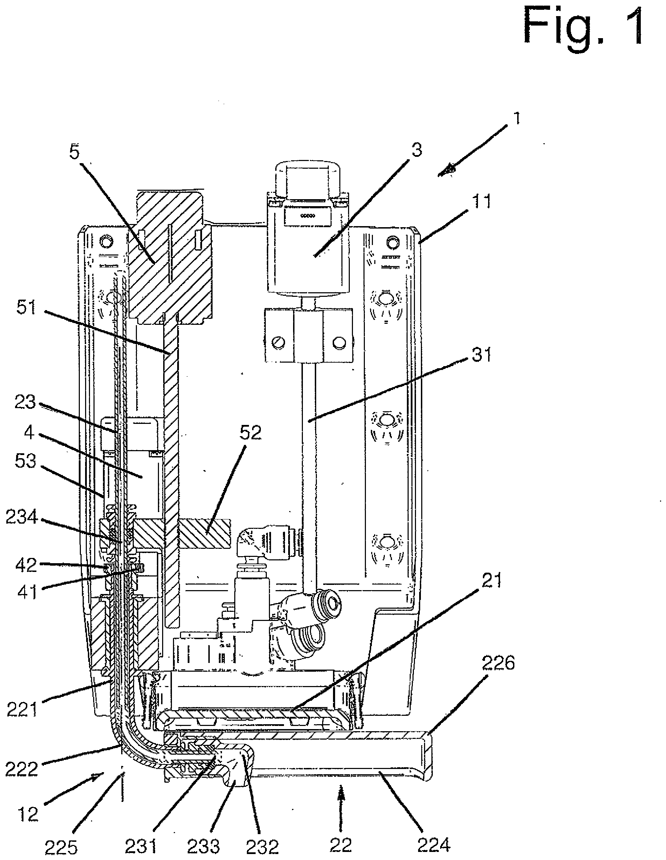

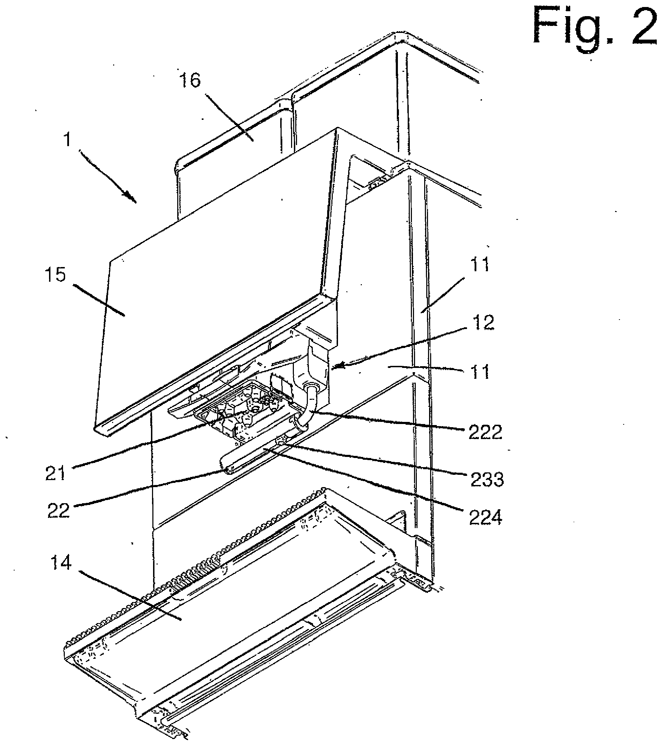

Fig. 1 zeigt einen Teil bzw. Fig. 2 die Vorderseite einer Kaffeemaschine 1 mit einem Gehäuse 11, einer vorderen Wandung 11' und einer an dieser angeordneten Vorrichtung 12. Die mit herkömmlichen Komponenten, wie eine Zubereitungseinheit für Kaffee und eine Zubereitungseinheit für Milch, vorzugsweise ein Milchschäumer, ausgestattete Kaffeemaschine 1 ist daher nicht näher erläutert.

In Fig. 2 sind von der Kaffeemaschine 1 eine Bedien- und Steuereinheit 15 mit einem Display, zwei Kaffeebohnenbehälter 16, ein Haupt-Getränkeauslass 21 und eine Abtropfschale 14 ersichtlich.

Die Vorrichtung 12 mit einem Auslass 233 für ein Fluid, insbesondere für Milchschaum oder ähnliche Getränke, ist mit einer den Auslass 233 räumlich in zwei oder drei Koordinatenrichtungen x, y, z bewegbaren Steuereinrichtung versehen, so dass während dem Auslassen des Fluides ein graphisches Muster auf der Oberfläche des in den Behälter eingelassenen Getränks, vorzugsweise Kaffee, automatisch erzeugbar ist. Insbesondere wird Milchschaum für die Erzeugung eines Cappuccinos oder ähnlichem ausgelassen. Es kann sich aber auch um ein cremeartiges Fluid handeln.

Die Vorrichtung 12 ist über einen Antrieb 3 mit einer Spindel 31 in ihrer vertikalen Position in z-Richtung im Gehäuse 11 verstellbar. Dergestalt kann die Vorrichtung für verschiedene Behältergrössen in eine geeignete Position oberhalb einer Ablagefläche der Kaffeemaschine gebracht werden, damit Tassen oder Gefässe als Behälter unterschiedlicher Höhe darauf platziert werden können. Dabei kann die Vorrichtung in eine günstige Position oberhalb des Tassenrandes eingestellt werden. Dies kann auch durch eine automatische Einstellung der z-Position erfolgen, wenn die Behälterhöhe durch ein eingebautes Messelement feststellbar wäre.

Erfindungsgemäss ist eine schwenkbare Führungshülse 22 und ein in dieser verschiebbares, das Fluid durchlassendes Schlauchelement 23 mit dem als Auslasskopf gebildeten Auslass 233 vorgesehen. Damit ist dieser Auslass 233 durch das Schlauchelement und die Führungshülse in einer Ebene in diesen zwei Koordinatenrichtungen x und y durch die Steuereinrichtung gesteuert bewegbar und der Milchschaum oberhalb des Behälters auslassbar.

Die Führungshülse 22 ist zweckmässigerweise von einem um näherungsweise 90° abgewinkelten Hülsenteil 222 gehalten, das um eine Drehachse 225 drehbar gelagert und von einem von der Steuereinrichtung gesteuerten Motorantrieb 4 drehbar ist. In das gebogene Hülsenteil 222 erstreckt sich dieses flexible Schlauchelement 23, das an seinem nicht dargestellten Ende mit der Zubereitungseinheit für die Milch in Fluidverbindung steht. Derart fungiert die gebogene Hülse 22 als Führungshülse für das Schlauchelement 23. Der Hülsenteil 222 umfasst einen Abschnitt 221, der um die senkrechte Drehachse 225 schwenkbar gelagert ist. Bei einer Drehung der Führungshülse 22 um die Drehachse 225 beschreibt diese eine kreisringförmige oder kreisringsegmentförmige Fläche unterhalb des Haupt-Getränkeauslasses 21.

Ein Stutzen einer Kappe 232 des Auslasses 233 ragt durch den Längsschlitz 224 hindurch und ist somit in diesem geführt. Indem in einem Bereich 234 des flexiblen Schlauchelements 23 eine Zug- oder Druckkraft in der Längsrichtung des Schlauchelements aufgebracht wird, kann der Auslass 233 am Ende des Schlauchelements entlang der Längsrichtung der Führungshülse bewegt werden.

Weiterhin kann der Auslass 233 durch das Verschwenken der Führungshülse um die Drehachse 225 in einer Tangentialrichtung verstellt werden. Damit kann er an jeder beliebigen Stelle innerhalb eines Kreisrings oder eines Kreisringsegments gesteuert positioniert werden, wobei der Kreisring oder das Segment durch die Erstreckung und Lage des Längsschlitzes 224 relativ zur Drehachse 225 sowie den Schwenkbereich der Führungshülse gegeben sind. Dabei sind der Schwenkbereich sowie die Länge und radiale Anordnung des Längsschlitzes so gewählt, dass der Auslass 233 über die gesamte Oberfläche eines bestimmungsgemäss auf einer Ablage unterhalb der Vorrichtung platzierten Behälters bzw. annähernd über den gesamten Durchmesserbereich des darunter stellbaren Behälters bewegbar ist.

Die beschriebene Vorrichtung zum Fördern des Fluids, welche die Führungshülse 22 und das Schlauchelement 23 umfasst, ist weiterhin derart ausgestaltet, dass das Verfahren und Platzieren des Auslasses 233 innerhalb der genannten Fläche automatisiert und gesteuert erfolgen kann. Hierzu ist einerseits an der Vorrichtung 12 eine Antriebseinheit 4 für die Tangentialverstellung der Position des Auslasses 233 bzw. zum Verdrehen oder Verschwenken der Führungshülse um die senkrechte Drehachse 225 angeordnet. Hierzu ist beispielsweise auf der Achse eines Motors ein Ritzel 41 angeordnet, welches mit seiner Verzahnung in die Verzahnung eines Verzahnungselements 42 eingreift, das wiederum mit dem drehachsparallelen proximalen Abschnitt 221 der Führungshülse drehfest gekoppelt ist. Derart bewirkt die Antriebseinheit 4 ein Verschwenken der Führungshülse 22 um die senkrechte Drehachse 225, und somit ein tangentiales Verfahren der Ausgiessöffnung 233.

Eine weitere Antriebseinheit 5 ist mit einer Gewindespindel 51 gekoppelt, um diese um ihre Längsachse zu drehen. Mit der Gewindespindel ist eine Mutter 52 drehverbunden, welche an einer Strebe 53 gegen ein Verdrehen um die Längsachse der Gewindespindel 51 abgestützt ist. Bei einer Drehbewegung der Gewindespindel 51 wird eine Axialbewegung der Mutter 52 bewirkt. Diese Mutter 52 ist mit dem Abschnitt 234 des flexiblen Schlauchelements 23 gekoppelt, das somit durch die Antriebseinheit 5 entlang seiner Längsrichtung bewegt wird, was in einer bezogen auf die Drehachse 225 radialen Bewegung der Ausgiessöffnung 233 resultiert.

Die Antriebseinheiten 4 und 5 können durch die Steuereinrichtung abwechselnd oder gleichzeitig und in unterschiedlichen Geschwindigkeiten für den Auslass 233 in tangentialer und radialer Richtung gesteuert betrieben werden, derart, dass der Auslass 233 einer definierten Spur in einer waagerechten Ebene unterhalb des Haupt-Getränkeauslasses 21 folgt.

Wenn während der Bewegung des Auslasses 233 kontinuierlich oder intermittierend eine Getränkekomponente, insbesondere Milchschaum, durch das Schlauchelement zu diesem Auslass 233 geführt wird, so entsteht auf einer unterhalb diesem liegenden Oberfläche ein Muster aus dieser Getränkekomponente. Wenn dementsprechend in einem ersten Schritt beispielsweise Kaffee durch den Haupt-Getränkeauslass in eine Tasse gefüllt wird, und nachfolgend durch den Auslass 233 Milchschaum ausgebracht wird, der gesteuert entlang einer bestimmten Spur verfahren wird, können automatisiert und präzise beliebige ästhetisch ansprechende Muster aus Milchschaum auf der Oberfläche des Kaffees erzeugt werden.

Vorteilhaft ist dieser Milchschäumer derart ausgestaltet, dass der von diesem erzeugte Milchschaum in seiner Konsistenz variabel eingestellt werden kann, damit das Muster stets in optimaler Weise erzeugbar ist. Dies kann beispielsweise durch Steuerung der Luftzufuhrmenge verändert und eingestellt werden.

Das Gehäuseteil 226 der Führungshülse 22 mit dem Längsschlitz 224 ist abnehmbar und ebenso ist die den Auslass 233 bildende Kappe 232 lösbar mit dem flexiblen Schlauchelement 23 verbunden. Damit kann die Reinigung derselben erleichtert und die Hygiene verbessert werden.

Die Vorrichtung erfordert, nachdem die Steuerung der Antriebseinheiten 4 und 5 für die Verstellung der Ausgiessöffnung für den Milchschaum einmal für die Erzeugung bestimmter Muster programmiert ist, keine zusätzlichen Manipulationen durch den Bediener ausser allenfalls der Auswahl des zu erzeugenden Musters.

Wie aus Fig. 2 ersichtlich ist, ist die Führungshülse 22 mit dem Auslass 233 derart angeordnet, dass sie im Ruhezustand an die frontseitige Wandung 11' zurückgeschwenkt ist, damit der Haupt-Getränkeauslass 21 nach unten frei ist, um durch diesen Kaffee oder ähnliches ungehindert in den Behälter einfüllen zu können. Die Führungshülse ist dabei annähernd parallel nahe bei der frontseitigen Wandung 11' ausgerichtet. Es könnte sogar eine schliessbare Ausnehmung in der Wandung vorgesehen sein, in welche die Führungshülse einschwenkbar sein könnte.

Die Erfindung liesse sich noch durch andere Varianten veranschaulichen. So könnte die Führungshülse theoretisch statt um die Drehachse schwenkbar auch verschiebbar oder zusätzlich verschiebbar in wenigstens einer nicht näher gezeigten Führung verstellbar angeordnet sein. Vorteilhaft ausgehend von der Ruheposition, bei der sich die Führungshülse an der Wandung der Kaffeemaschine befindet, würde sie in der horizontalen Ebene weg von der Wandung mit einem steuerbaren verändernden Hub verschoben werden, so dass die Führungshülse und mit ihr der darin längsbewegliche Auslass oberhalb des Behälterinhaltes dieses Muster erzeugen könnten.

Als Variante könnten zwei oder mehrere solcher Schlauchelemente mit je einem Auslass nebeneinander in der Führungshülse in ihrer Längsrichtung verschiebbar angeordnet sein. Damit könnte gleichzeitig eine grössere Fläche auf dem eingefüllten Kaffee mit Milchschaum bedeckt werden oder zwei unterschiedliche Fluide auch unabhängig voneinander ausgelassen werden, zum Beispiel Milchschaum und Schokolade-Creme oder ähnliches.

## Patentansprüche

1. Vorrichtung mit einem Auslass für ein Fluid, insbesondere für Milchschaum, mit einer den Auslass (233) räumlich in zwei oder drei Koordinatenrichtungen (x, y, z) bewegbaren Steuereinrichtung, so dass während dem Auslassen des Fluides ein graphisches Muster auf der Oberfläche des in den. Behälter eingelassenen Getränks, vorzugsweise Kaffee, automatisch erzeugbar ist, **gekennzeichnet durch** eine schwenkbare und/oder verschiebbar gelagerte Führungshülse (22) und wenigstens ein in dieser Führungshülse (22) verschiebbares, das Fluid durchlassende Schlauchelement (23) mit dem Auslass (233), der durch das Schlauchelement (23) und die Führungshülse (22) wenigstens in einer Ebene in diesen zwei Koordinatenrichtungen (x, y) durch die Steuereinrichtung oberhalb des Behälters gesteuert bewegbar und dabei das Fluid, insbesondere der Milchschaum in diesen Behälter einlassbar ist.

2. Vorrichtung nach Anspruch 1, **dadurch gekennzeichnet, dass** die Führungshülse (22) wenigstens einen um näherungsweise 90° abgewinkelten Hülsenteil (222) aufweist, der um eine Drehachse (225) drehbar gelagert und von einem von der Steuereinrichtung gesteuerten Motorantrieb (4) drehbar ist.

3. Vorrichtung nach Anspruch 2, **dadurch gekennzeichnet, dass** sich das Schlauchelement (23) durch die Führungshülse (22) und den abgewinkelten Hülsenteil (222) erstreckt und von einem von der Steuereinrichtung gesteuerten Antriebseinheit (5, 51, 52) zur Verschiebung entlang seiner Längserstreckung gekoppelt ist.

4. Vorrichtung nach einem der vorangehenden Ansprüche 1 bis 3, **dadurch gekennzeichnet, dass** die Führungshülse (22) einen Längsschlitz (224) aufweist, durch welchen sich der endseitig der Führungshülse (22) zugeordnete Auslass (233) erstreckt und darin geführt ist, wobei die Führungshülse (22) bzw. der Längsschlitz (224) wie auch der Verschiebeweg des Schlauchelementes (23) eine solche Länge aufweisen, damit der Auslass (233) annähernd über den gesamten Durchmesserbereich des darunter stellbaren Behälters bewegbar ist.

5. Vorrichtung nach Anspruch 1, **dadurch gekennzeichnet, dass** die Führungshülse (22) senkrecht zu der Ebene, in der die Führungshülse (22) schwenkbar und/oder verschiebbar ist, translatorisch verschiebbar ist.

6. Kaffeemaschine, mit einer Vorrichtung (1) nach einem der vorangehenden Ansprüche 1 bis 5, mit einem Gehäuse (11) mit einer frontseitigen Wandung (11'), vor der ein Haupt-Getränkeauslass (21) und unterhalb diesem eine Ablagefläche einer Abtropfschale (14) oder dergleichen für einen darauf stellbaren und zu füllenden Behälter angeordnet sind,
**dadurch gekennzeichnet, dass**
die Führungshülse (22) mit dem Auslass (233) derart angeordnet ist, dass sie sich beim gesteuerten Bewegen für das Erzeugen eines Musters unterhalb des Haupt-Getränkeauslasses (21) befindet, hingegen im Ruhezustand an die frontseitige Wandung (11') zurückgeschwenkt ist, damit der Haupt-Getränkeauslass (21) nach unten frei ist, um durch diesen Kaffee oder ähnliches ungehindert in den Behälter einfüllen zu können.

7. Kaffeemaschine nach Anspruch 6, **dadurch gekennzeichnet, dass** die Führungshülse (22) im Ruhezustand annähernd parallel unmittelbar bei der frontseitigen Wandung (11') liegt oder in eine Ausnehmung in derselben eingeschwenkt ist.

8. Verfahren zum Zubereiten eines Getränks mit einer Vorrichtung nach einem der Ansprüche 1-5 oder einer Kaffeemaschine nach einem der Ansprüche 6 oder 7, umfassend eine erste Getränkekomponente zuzubereiten, die erste Getränkekomponente durch einen Haupt-Getränkeauslass (21), indes eine zweite Getränkekomponente zuzubereiten und die zweite Getränkekomponente durch einen zweiten Auslass (233) auszulassen, wobei der zweite Auslass (233) während des Auslassens der zweiten Getränkekomponente in einer Ebene gesteuert bewegt wird, wobei wenigstens eine der Bewegungsvorgänge erfolgt, nämlich diesen zweiten Auslass (233) kreisförmig um eine Drehachse (225) in einer Tangentialrichtung zu verschwenken oder bezogen auf die Drehachse (225) radial zu bewegen, oder eine Kombination der genannten Bewegungsvorgänge.

## Claims

1. Apparatus with an outlet for a fluid, in particular for milk froth, having a control unit that which can move the outlet (233) spatially in two or three coordinate directions (x, y, z), so that during the dispensing of the fluid a graphic pattern can be created automatically on the surface of the beverage dispensed in the container, preferably coffee, **characterized by**
a pivotable and/or displaceably housed guide sleeve (22) and at least one hose element (23), which can be displaced in this guide sleeve (22) and through which the fluid passes, having the outlet (233), which can be moved with the hose element (23) and the guide sleeve (22) in at least one plane in these two coordinate directions (x, y) in controlled manner by the control unit above the container, and in so doing the fluid, in particular the milk froth can be dispensed into said container.

2. Apparatus according to claim 1, **characterized in that** the guide sleeve (22) has at least one sleeve part (222) angled at approximately 90°, which is rotatable housed about an axis of rotation (225) and can be rotated in a controlled manner by a motor drive (4) controlled by the control unit.

3. Apparatus according to claim 2, **characterized in that** the hose element (23) extends through the guide sleeve (22) and the angled sleeve part (222) and is coupled by a drive unit (5, 51, 52) controlled by the control unit for displacement along its longitudinal extension.

4. Apparatus according to one of the preceding claims 1 to 3, **characterized in that** the guide sleeve (22) has a longitudinal slot (224), through which the outlet (233) assigned to the end of the guide sleeve (22) extends and is guided therein, wherein the guide sleeve (22) or the longitudinal slot (224) and the displacement path of the hose element (23) having such a length, that the outlet (233) can be moved over approximately the entire diameter range of the container which can be placed thereunder.

5. Apparatus according to claim 1, **characterized in that** the guide sleeve (22) can be displaced in a translational motion perpendicular to the plane, in which the guide sleeve (22) is pivotable and/or displaceable.

6. Coffee machine, having an apparatus (1) according to one of the preceding claims 1 to 5, with a housing (11) having a front wall (11'), in front of which a main beverage outlet (21) and a support surface of a drip pan (14) or the like is arranged thereunder, for a container to be positioned thereon and to be filled, **characterized in that** the guide sleeve (22) with the outlet (233) is arranged such that during the controlled movement, it is located below the main beverage outlet (21) to create a pattern, and pivoted back against the front wall (11') in the idle state, in order that the space below the main beverage outlet (21) is clear in order to dispense coffee or the like into the container without obstruction.

7. Coffee machine according to claim 6, **characterized in that** the guide sleeve (22) is positioned approximately parallel directly in front of the front wall (11') in the idle state, or is pivoted into a recess in the same.

8. Method for preparing a beverage with an apparatus according to one of the preceding claims 1 to 5 or a coffee machine according to one of the preceding claims 6 or 7, comprising the preparation of a first beverage component, dispensing of the first beverage component through a main beverage outlet (21), while preparing a second beverage component and dispensing the second beverage component through a second outlet (233), wherein the second outlet (233) is moved in a plane in controllable manner during dispensing the second beverage component, wherein at least one of the movement processes takes place, specifically to pivot this second outlet (233) in a tangential direction in a circle about an axis of rotation (225) or to move same radially in respect of the axis of rotation (225), or a combination of the named movement processes.

## Revendications

1. Installation ayant une sortie (233) pour un fluide, notamment pour de la mousse de lait, comprenant un dispositif de commande mobile dans l'espace dans deux ou trois directions (x, y, z) de coordonnées, de manière à pouvoir produire automatiquement, pendant la sortie du fluide, un motif graphique à la surface de la boisson, de préférence du café, introduite dans le récipient, **caractérisée par**
un manchon (22) de guidage monté pivotant et/ou coulissant et au moins un élément (23) de conduit souple, qui peut coulisser dans ce manchon (22) de guidage et dans lequel passe le fluide, ayant la sortie (233), qui, par l'élément (23) de conduit souple et le manchon (22) de guidage, peut être déplacée de manière commandée au-dessus du récipient par le dispositif de commande au moins dans un plan dans ces directions (x, y) de coordonnées et ainsi le fluide, notamment la mousse de lait, peut être introduite dans ce récipient.

2. Installation suivant la revendication 1, **caractérisée en ce que** le manchon (22) de guidage a au moins une partie (222) de manchon, coudée à peu près à 90°, qui peut tourner autour d'un axe (225) de rotation et qui peut être entraînée en rotation par un entraînement (4) motorisé commandé par le dispositif de commande.

3. Installation suivant la revendication 2, **caractérisée en ce que** l'élément (23) de conduit souple s'étend dans le manchon (22) de guidage et dans la partie (222) de manchon coudée et est accouplé pour le déplacement le long de son étendue longitudinale à une unité (5, 51, 52) d'entraînement, commandée par le dispositif de commande.

4. Installation suivant la revendication 1 à 3 précédentes, **caractérisée en ce que** le manchon (22) de guidage a une fente (224) longitudinale, dans laquelle s'étend la sortie (233) associée du côté de l'extrémité au manchon (22) de guidage et y est guidée, le manchon (22) de guidage et respectivement la fente (224) longitudinale, tout comme le trajet de déplacement de l'élément (23) de conduit souple ayant une longueur telle, que la sortie (223) peut être déplacée à peu près sur toute la région de diamètre du récipient pouvant être mis en dessous.

5. Installation suivant la revendication 1, **caractérisée en ce que** le manchon (22) de guidage peut être déplacé en translation perpendiculairement au plan, dans lequel le manchon (22) de guidage peut pivoter/ou coulisser.

6. Machine à café, comprenant une installation (1) suivant l'une des revendications 1 à 5 précédentes, comprenant une enveloppe (11) ayant une paroi (11') du côté avant, devant laquelle sont disposées une sortie (21) principale de boisson et en dessous de laquelle est disposée une surface de dépôt d'une coque (14) d'égouttage ou analogue pour un récipient à y mettre et à remplir, **caractérisée en ce que**
le manchon (22) de guidage est disposé avec la sortie (233) de manière à se trouver, lors d'un déplacement commandé pour la production d'un motif, en dessous de la sortie (21) principale de boissons, tandis que, à l'état de repos, il est escamoté sur la paroi (11') du côté avant, afin que la sortie (21) principale de boisson soit libre vers le bas, pour pouvoir remplir par celle-ci le récipient de café ou analogue sans obstacle.

7. Machine à café suivant la revendication 6, **caractérisée en ce que** le manchon (22) de guidage est, à l'état de repos, directement à peu près parallèle à la paroi (11') du côté avant ou est escamoté dans un évidement de celle-ci.

8. Procédé de préparation d'une boisson avec une installation sur l'une des revendications 1 à 5, ou une machine à café suivant l'une des revendications 6 ou 7, comprenant
préparer un premier constituant de la boisson, faire sortir le premier constituant de la boisson par une sortie (21) principale de la boisson, tout en préparant un deuxième constituant de la boisson et en faisant sortir le deuxième constituant de la boisson par une deuxième sortie (233), dans lequel on déplace la deuxième sortie (233) pendant la sortie du deuxième constituant de la boisson de manière commandée dans un plan, dans lequel on effectue au moins l'une des opérations de déplacement, à savoir on fait pivoter dans une direction tangentielle cette deuxième sortie (233) en forme de cercle autour d'un axe (225) de rotation ou on la déplace radialement par rapport à l'axe (225) de rotation ou on effectue une combinaison des opérations de déplacement mentionnées.
